(19) Europäisches Patentamt
European Patent Office
Office européen des brevets

(11) **EP 1 758 185 B1**

(12) **EUROPEAN PATENT SPECIFICATION**

(45) Date of publication and mention of the grant of the patent:
**17.10.2018 Bulletin 2018/42**

(51) Int Cl.:
*H01M 8/026* (2016.01)    *H01M 8/0226* (2016.01)
*H01M 8/0213* (2016.01)    *H01M 8/0221* (2016.01)
*G01N 13/02* (2006.01)

(21) Application number: **05743887.1**

(22) Date of filing: **30.05.2005**

(86) International application number:
**PCT/JP2005/009875**

(87) International publication number:
**WO 2005/117180 (08.12.2005 Gazette 2005/49)**

(54) **POLYELECTROLYTE FUEL CELL-USE SEPARATOR AND POLYELECTROLYTE FUEL CELL**

TRENNGLIED ZUR VERWENDUNG IN EINER POLYELEKTROLYT-BRENNSTOFFZELLE UND POLYELEKTROLYT-BRENNSTOFFZELLE

SÉPARATEUR POUR CELLULE ÉLECTROCHIMIQUE POLYÉLECTROLYTIQUE ET CELLULE ÉLECTROCHIMIQUE POLYÉLECTROLYTIQUE

(84) Designated Contracting States:
**DE FR GB IT**

(30) Priority: **31.05.2004   JP 2004161913**
**01.06.2004   JP 2004162890**

(43) Date of publication of application:
**28.02.2007   Bulletin 2007/09**

(73) Proprietor: **Panasonic Intellectual Property Management Co., Ltd.**
**Osaka-shi, Osaka 540-6207 (JP)**

(72) Inventors:
• **HATOH, Kazuhito**
  **Chuo-ku,Osaka-shi,Osaka 540-6319 (JP)**
• **KANBARA, Teruhisa**
  **Chuo-ku,Osaka-shi Osaka 540-6319 (JP)**
• **SHIBATA, Soichi**
  **Osaka-shi,Osaka 540-6319 (JP)**
• **YASUMOTO, Eiichi**
  **Osaka-shi,Osaka 540-6319 (JP)**
• **UNOKI, Shigeyuki**
  **Osaka-shi,Osaka ,540-6319 (JP)**
• **NAGASAKI, Tatsuo**
  **Osaka-shi ,Osaka (JP)**
• **TERANISHI, Masatoshi**
  **Osaka-shi,Osaka (JP)**
• **KAWASHIMA, Tsutomu**
  **Osaka-shi,Osaka (JP)**
• **SUKAWA, Toru**
  **Osaka-shi,Osaka (JP)**
• **TAKEBE, Yasuo**
  **Osaka-shi,Osaka 540-6319 (JP)**

(74) Representative: **Werner, Patrick et al**
**Leinweber & Zimmermann**
**Rosental 7**
**80331 München (DE)**

(56) References cited:
EP-A- 0 975 040        EP-A1- 0 949 704
DE-A1- 10 130 347      JP-A- 1 311 570
JP-A- 8 138 695        JP-A- 11 195 422
JP-A- 2001 152 138     JP-A- 2001 256 987
JP-A- 2002 184 432     JP-A- 2002 270 195
JP-A- 2003 022 811     JP-A- 2003 022 812
JP-A- 2003 331 857     JP-A- 2004 146 303
JP-U- 7 026 751        US-A1- 2002 086 198

• **DATAPHYSICS: "Sessile Drop Method" INTERNET ARTICLE, [Online] 5 July 2003 (2003-07-05), XP002437480 Retrieved from the Internet: URL:http://web.archive.org/web/*/http://www.dataphysics.de/english/messmeth_sessil.htm> [retrieved on 2007-06-13]**

- **Max Height: "Ra RELATIONSHIP BETWEEN ARITHMETICAL MEAN (Ra) AND CONVENTIONAL DESIGNATION (REFERENCE DATA) Arithmetical Mean Roughness Ra Standard Series Cutoff Value "c (mm) Standard Series Type Arithmetical Mean Roughness Maximum Height Ten-Point Mean Roughness Code Determination Example (Figure) Determination", , 31 December 1994 (1994-12-31), XP055465495, Retrieved from the Internet: URL:https://www.mitsubishicarbide.com/application/files/5414/7209/8381/tec_surface_roughness_en-us.pdf [retrieved on 2018-04-09]**

**Description**

**Field of the Invention**

The present invention relates to a separator for a polymer electrolyte fuel cell, a polymer electrolyte fuel cell, a method of evaluating the separator for the polymer electrolyte fuel cell, and a method of manufacturing the separator for the polymer electrolyte fuel cell. More particularly, the present invention relates to an electrically conductive separator for a polymer electrolyte fuel cell, which contains electrically conductive carbon and a binder binding the electrically conductive carbon, a method of evaluating water discharge abilities of the polymer electrolyte fuel cell and the separator for the polymer electrolyte fuel cell, and a method of manufacturing the separator for the polymer electrolyte fuel cell.

**Background Art**

In polymer electrolyte fuel cells, there exists a problem that water condensation occurs and condensed water clogs in gas passages inside the fuel cell or inside electrodes, i.e., "flooding" occurs, causing unstable or degraded cell performance. In order to avoid such a problem, a variety of separators for polymer electrolyte fuel cells (hereinafter referred to as separators), or operation methods have been proposed or practiced. Specifically, an operation method to increase supply pressures of an anode gas and a cathode gas to purge the condensed water has been typically practiced.

However, in the operation method to increase the supply pressures of the anode gas and the cathode gas to purge the condensed water, high-pressure supply means is required to supply these reaction gases and the polymer electrolyte fuel cell is required to have a pressure-resistant structure. In addition, the high-pressure supply of the reaction gases may lead to reduced energy efficiency of the polymer electrolyte fuel cell.

As a solution to this, a method of performing a water-repellency treatment or hydrophilicity treatment to a surface of a separator or a separator (see documents 1 through 19) have been disclosed. In addition, a method of forming a separator from a hydrophilic material or a water-repellent material and increasing or decreasing a contact angle between a separator and water or a separator (see documents 20 through 30) have been disclosed. Furthermore, a separator having a structure for inhibiting flooding, a combination of a separator and an electrode, and the like (see documents 31 through 37), have been disclosed.

[Document 1] Japanese Laid-Open Patent Application Publication No. 2003-282087
[Document 2] Japanese Laid-Open Patent Application Publication No. 2003-257468
[Document 3] Japanese Laid-Open Patent Application Publication No. 2003-151585
[Document 4] Japanese Laid-Open Patent Application Publication No. 2003-151572
[Document 5] Japanese Laid-Open Patent Application Publication No. 2003-123780
[Document 6] Japanese Laid-Open Patent Application Publication No. 2003-112910
[Document 7] Japanese Laid-Open Patent Application Publication No. 2003-109619
[Document 8] Japanese Laid-Open Patent Application Publication No. 2002-313356
[Document 9] Japanese Laid-Open Patent Application Publication No. 2002-042830
[Document 10] Japanese Laid-Open Patent Application Publication No. 2002-020690
[Document 11] Japanese Laid-Open Patent Application Publication No. 2001-076740
[Document 12] Japanese Laid-Open Patent Application Publication No. 2000-251903
[Document 13] Japanese Laid-Open Patent Application Publication No. 2000-223131
[Document 14] Japanese Laid-Open Patent Application Publication No. 2000-100452
[Document 15] Japanese Laid-Open Patent Application Publication No. 2000-036309
[Document 16] Japanese Laid-Open Patent Application Publication No. Hei. 09-298064
[Document 17] Japanese Laid-Open Patent Application Publication No. Hei. 07-302600
[Document 18] Japanese Laid-Open Patent Application Publication No. Hei. 05-251091
[Document 19] Domestic re-publication of PCT international publication for patent application No. 99/40642
[Document 20] Japanese Laid-Open Patent Application Publication No. 2003-297385
[Document 21] Japanese Laid-Open Patent Application Publication No. 2003-217608
[Document 22] Japanese Laid-Open Patent Application Publication No. 2003-208905
[Document 23] Japanese Laid-Open Patent Application Publication No. 2003-208904
[Document 24] Japanese Laid-Open Patent Application Publication No. 2002-352813
[Document 25] Japanese Laid-Open Patent Application Publication No. 2001-283873
[Document 26] Japanese Laid-Open Patent Application Publication No. 2001-093539
[Document 27] Japanese Laid-Open Patent Application Publication No. 2000-31695
[Document 28] Japanese Laid-Open Patent Application Publication No. Hei. 10-003931
[Document 29] Translation of PCT International Application No. 2001-209950

[Document 30] Translation of PCT International Application No. Hei. 08-503100

[Document 31] Japanese Laid-Open Patent Application Publication No. 2003-197217

[Document 32] Japanese Laid-Open Patent Application Publication No. 2003-197203

[Document 33] Japanese Laid-Open Patent Application Publication No. 2003-168452

[Document 34] Japanese Laid-Open Patent Application Publication No. 2003-007312

[Document 35] Japanese Laid-Open Patent Application Publication No. 2002-343369

[Document 36] Japanese Laid-Open Patent Application Publication No. 2002-203571

[Document 37] Japanese Laid-Open Patent Application Publication No. 2001-110432

EP975040 and EP949704 disclose a separator for a polymer electrolyte fuel cell.

**Disclosure of the Invention**

**Problems to be Solved by the Invention**

Typically, the polymer electrolyte fuel cell is configured to vary its output power, i.e., its output current according to a required power load. In this case, for higher efficiency, an operation of the fuel cell is carried out with a substantially constant fuel utilization ratio and oxygen utilization ratio while varying a flow rate of supply gas according to the output current. Specifically, the flow rate of the supply gas is reduced during a partial-load operation. In this case, since a pressure loss of the supply gas decreases, "flooding", i.e., water clogging in the separator is likely to occur especially during the partial-load operation. Accordingly, there has been a need for development of a separator having a surface with high water discharge ability under the condition in which the pressure loss of the supply gas is low (e.g., conditions of 10kPa or lower).

In the above illustrated prior arts disclosed in the documents 1 through 37, a separator having high water discharge ability under the condition in which the pressure loss of the supply gas is low (e.g., conditions of 10kPa or lower) has not yet been achieved and therefore, there has been still room for improvement. Particularly, a separator (compression-molded separator) which is manufactured by compression-molding a mixture containing electrically conductive carbon and a binder has a problem that high water discharge ability of condensed water is difficult to achieve under the condition in which the pressure loss of the supply gas is low (e.g., conditions of 10kPa or lower).

The present invention has been developed in view of the above described problems, and an object of the present invention is to provide a separator for a polymer electrolyte fuel cell which has a surface with high condensed water discharge ability under conditions in which pressure loss of supply gas is low. Another object of the present invention is to provide a highly reliable polymer electrolyte fuel cell which comprises the separator for the polymer electrolyte fuel cell of the present invention and is capable of well inhibiting occurrence of flooding under the condition in which the pressure loss of the supply gas is low. A method of evaluating the separator for the polymer electrolyte fuel cell which is capable of accurately evaluating condensed water discharge ability is also disclosed.

**Means for Solving the Problems**

In order to achieve the above described objects, inventors studied intensively and examined condensed water discharge ability. As a result, they discovered that high condensed water discharge ability is obtained by setting a water droplet falling angle which has not been noticed so far to a predetermined angle or less when a surface of a passage of a separator for the polymer electrolyte fuel cell is under power generation condition, i.e., under wet and operation temperature conditions, and thus conceived the invention.

The present invention provides a separator for a polymer electrolyte fuel cell, which contains electrically conductive carbon and a binder that binds the electrically conductive carbon, the separator comprising a reaction gas passage formed on at least a main surface thereof, wherein a water droplet falling angle of a surface the reaction gas passage is not less than 5 degrees and not more than 45 degrees when a water droplet of not less than 50 $\mu$L and not more than 80 $\mu$L is dropped under a condition in which ambient temperature is not lower than 50°C and not higher than 90°C and relative humidity is not less than 70% and not more than 100%.

In such a structure, since the surface of the reaction gas passage of the separator for the polymer electrolyte fuel cell has high condensed water discharge ability under the condition in which the pressure loss of supply reaction gas is low, the separator for the polymer electrolyte fuel cell is capable of effectively inhibiting flooding. When the above structure is applied to a separator (compression-molded separator) formed by compression-molding the mixture containing the electrically conductive carbon and the binder, high condensed water discharge ability is easily and correctly obtained under the condition in which the pressure loss of the supply gas is low (e.g., condition of 10kPa or less). It shall be appreciated that the separator for the polymer electrolyte fuel cell is an electrically conductive separator made of the electrically conductive carbon.

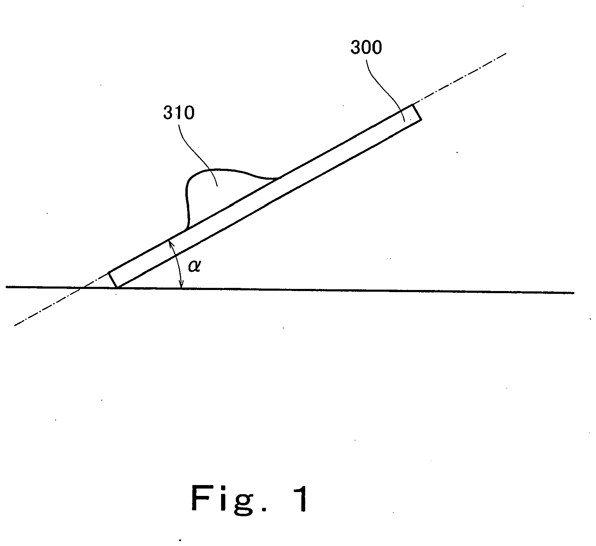

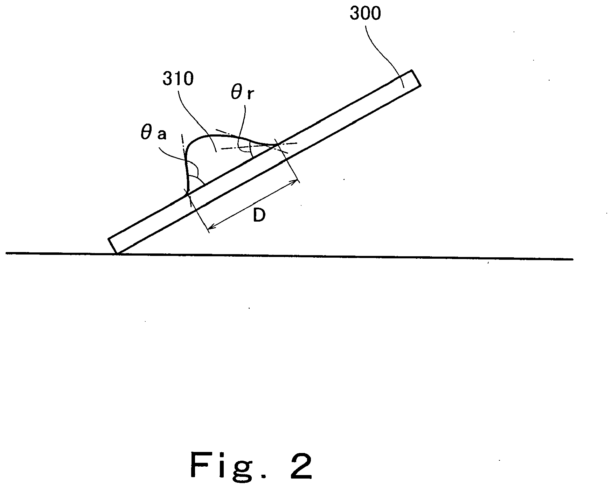

As used herein, the term "reaction gas" refers to an oxidizing gas (gas containing an oxidizing agent) and a reducing gas (gas containing a reducing agent) which are supplied to the polymer electrolyte fuel cell. Also, the term "reaction gas passage" refers to a groove formed on the surface of the separator for the polymer electrolyte fuel cell, a bore, etc through which the reaction gas flows in an assembled state of the polymer electrolyte fuel cell. Furthermore, the term "water droplet falling angle" refers to a tilting angle of the surface of measurement target (e.g., separator), at which the water droplet stationary on the surface of the measurement target starts to fall, and is an angle $\alpha$ found by a measuring method which will be described with reference to Figs. 1 and 2.

In the separator for the polymer electrolyte fuel cell, of the present invention, the surface of the reaction gas passage has a center line average height of not less than 1.5 $\mu$m and not more than 4.0 $\mu$m. In such a structure, the water droplet angle is improved easily and correctly without substantially affecting durability of the separator for the polymer electrolyte fuel cell and using the oxygen plasma treatment. Likewise, it is desired that, in the separator for the polymer electrolyte fuel cell of the present invention, the center line average height of the surface of the reaction gas passage be not less than 2.5 $\mu$m and not more than 4.0 $\mu$m. In order to compactly size the separator for practical use and to well reduce deviation from a design value of the size of the passage actually manufactured, it is desired that the center line average height of the surface of the reaction gas passage be not more than 4.0 $\mu$m.

In the separator for the polymer electrolyte fuel cell of the present invention, fine convex portions of the center line average height of the reaction gas passage may have a pitch of substantially 5 $\mu$m or less. In such a structure, since oscillation of the pressure loss of the supply reaction gas is inhibited easily and correctly under the condition in which the loss of the supply pressure loss of the reaction gas is low, oscillation of the output of the polymer electrolyte fuel cell during power generation is inhibited easily and correctly.

In order to reliably obtain the effects of the present invention, in the separator for the polymer electrolyte fuel cell, the surface of the reaction gas passage may be formed by blasting, a laser process, or a molding process.

In the separator for the polymer electrolyte fuel cell of the present invention, the surface of the reaction gas passage may be formed by multistep blasting. In such a configuration, since the surface of the reaction gas passage increases a specific surface area because of multistage concave and convex structure formed on the surface of the reaction gas passage, the water droplet angle is correctly and easily controlled to be not less than 5 degrees and not more than 45 degrees. As used herein, the term "specific surface area" refers to a surface area per unit surface area of the separator passage. Also, the term "multistep blasting" refers to multistage blasting that uses particles with a smaller particle diameter in later blasting.

In the separator for the polymer electrolyte fuel cell, the surface of the reaction gas passage may be formed by an oxygen plasma treatment.

In such a structure, the water droplet falling angle $\alpha$ of the passage surface of the polymer electrolyte fuel cell is correctly and easily controlled to be not less than 5 degrees and not more than 45 degrees.

It is desired that the separator for the polymer electrolyte fuel cell be formed by compression molding a mixture containing the electrically conductive carbon and the binder. As previously described, in such a structure, the compression-molded separator having high condensed water discharge ability under the condition in which the pressure loss of the supply gas is low (e.g., condition of 10kPa or lower) is easily and correctly formed. Since the compression-molded separator is manufactured more easily and at lower cost (e.g., about 1/10) than a separator manufactured by cutting a hard plate mainly made of electrically conductive carbon, it contributes to mass production of the polymer electrolyte fuel cell by providing high water discharge ability to the compression-molded separator.

Furthermore, among the compression-molded separators, the separator for the polymer electrolyte fuel cell of the present invention may be a injection compression molded separator which may be manufactured using an injection molding technique. This provides further advantages to mass production.

The present invention provides a polymer electrolyte fuel cell comprising a separator for a polymer electrolyte fuel cell according to claim 1

Since the provision of the separator for the polymer electrolyte fuel cell of the present invention can well inhibit flooding, it is possible to achieve a highly reliable polymer electrolyte fuel cell that is capable of maintaining stable power generation under the condition in which the pressure loss of the supply gas is low.

Furthermore, a method of evaluating a separator for a polymer electrolyte fuel cell comprising: evaluating water discharge ability of condensed water in a reaction gas passage formed in the separator for the polymer electrolyte fuel cell based on a water droplet falling angle of a surface of the reaction gas passage, the water droplet of not less than 50$\mu$L and not more than 80$\mu$L is dropped to form the water droplet falling angle under a condition in which ambient temperature is not lower than 50°C and not higher than 90°C and relative humidity is not less than 70% and not more than 100% is hereby disclosed. In such a configuration, the condensed water discharge ability on the surface of the reaction gas passage of the separator for the polymer electrolyte fuel cell can be accurately evaluated.

In order to reliably obtain the effects of the present invention, in the method of evaluating a separator for a polymer electrolyte fuel cell of the present invention, the water droplet falling angle may be formed by dropping a water droplet onto the surface of the reaction gas passage.

In accordance with the method of manufacturing the separator for the polymer electrolyte fuel cell of the present invention, the separator for the polymer electrolyte fuel cell of the present invention can be easily and reliably obtained using known separator manufacturing techniques including selecting, materials, mixing method of materials, and adjusting a mixing ratio of materials, such as known surface treatment techniques (physical surface treatment, chemical surface treatment, etc), provided that the above mentioned condition of the water droplet falling angle is met.

**Effects of the Invention**

As should be appreciated from above, in accordance with the present invention, it is possible to provide a separator for a polymer electrolyte fuel cell which has a surface with high condensed water discharge ability under conditions in which pressure loss of supply gas is low. In accordance with the present invention, also, it is possible to provide a highly reliable polymer electrolyte fuel cell which comprises the separator for the polymer electrolyte fuel cell of the present invention and is capable of well inhibiting occurrence of flooding under the condition in which the pressure loss of the supply gas is low. Further, a method of evaluating the separator for the polymer electrolyte fuel cell which is capable of accurately evaluating condensed water discharge ability is also disclosed.

**Industrial Applicability**

The present invention is useful as a separator for a polymer electrolyte fuel cell which has a surface with high condensed water discharge ability under conditions in which pressure loss of supply gas is low, as a highly reliable polymer electrolyte fuel cell which comprises the separator for the polymer electrolyte fuel cell of the present invention and is capable of well inhibiting occurrence of flooding under the condition in which the pressure loss of the supply gas is low, as a method of evaluating the separator for the polymer electrolyte fuel cell which is capable of accurately evaluating condensed water discharge ability.

**Best Mode for Carrying Out the Invention**

First of all, knowledge of the inventors which is a background of the present invention will be described.
As previously explained, the inventors examined discharge ability of condensed water adhering onto a gas passage surface of a separator for a polymer electrolyte fuel cell (hereinafter referred to as a separator) and discovered as follows. In polymer electrolyte fuel cells in which liquid water is generated in the gas passage in a range of an operating temperature, high water discharge ability under an operating condition (in particular, high water discharge ability under the condition in which the pressure loss of the supply gas is low (e.g., condition of 10kPa or less)) is easily and reliably obtained more efficiently, by designing a structure of the gas passage surface (hydrophilicity, water-repellency, center line average height, etc) by paying attention to, rather than (1) a contact angle (wetting) of a water droplet stationary on the gas passage surface, as in a conventional method, (2) "water droplet falling angle" of the water droplet adhering to the gas passage surface which is pushed to start moving by a reaction gas flowing within the gas passage. More specifically, the high water discharge ability is obtained by designing the surface of the gas passage surface so that the water droplet falling angle is not less than 5 degrees and not more than 45 degrees when the water droplet of not less than 50 $\mu$L and not more than 80 $\mu$L is dropped under condition in which ambient temperature is not lower than 50°C and not higher than 90°C and relative humidity is not less than 70% and not more than 100%.
For example, typically, hydrophilic or water-repellent surface of the separator gas passage tends to improve discharge ability of condensed water in the separator. However, in the case of the separator designed according to (1), the condensed water on the surface of the separator gas passage may become water droplets having a finite area if the separator has a finite contact angle, regardless of its high hydrophilicity. Further, if water droplets gather, they may clog the passage.
In a case where the separator has a gas passage surface with high water-repellency, since the condensed water is pushed to roll in the form of very small water droplets by the gas on the separator gas passage surface, they are less likely to clog the separator gas passage. However, when the separator is designed according to (1) and has the gas passage surface with high roughness degree, the center line average height of the gas passage surface, i.e., fine concave and convex portions causes water droplets to be anchored by the gas passage surface. As a result, the water droplets may clog the passage.
As should be appreciated from the above, only the hydrophilicity or water-repellency according to design of (1) is insufficient to evaluate the discharge ability of condensed water on the separator gas passage surface of the separator.
Inventors discovered that the water discharge ability of the condensed water on the gas passage surface of the separator which is suitable for the operating condition of the fuel cell is evaluated easily and accurately based on the water droplet falling angle $\alpha$, independently of the hydrophilicity and water-repellency according to the design of (1).
As used herein, the term "contact angle" refers to an angle (internal angle of the liquid) formed between a liquid face and a solid face at a location where a free surface of stationary liquid (water droplet) is in contact with a solid wall (separator) (see page 739 of fifth edition of Iwanami Rikagaku Jiten), more specifically, an angle (internal angle of the water droplet) formed between a horizontally oriented surface of the measurement target (separator) and the liquid face (face in contact with ambient air which is different from the surface of the measurement target) of a predetermined amount of the water droplet placed in stationary state on the surface cf the measurement target.

As previously described, the "water droplet falling angle" refers to an angle $\alpha$ measured by the measurement method described with reference to Figs. 1 and 2, which will be described later.

Fig. 1 is a view schematically showing a method of measuring the water droplet falling angle. The water droplet falling angle is measured as follows. A surface of a measurement target 300, i.e., a passage surface of the separator 300 is horizontally placed. Then, a predetermined amount of water droplet 310 is dropped onto the surface of the measurement target 300. Then, the surface of the measurement target 300 is gradually tilted and a tilting angle $\alpha$ of the surface of the measurement target 300 at which the water droplet 310 starts to move from an initial position as shown in Fig. 1 is recorded in picture or image. From the picture or the image, the water droplet angle $\alpha$ is measured.

Fig. 2 is a view schematically showing a method of indirectly measuring the water droplet falling angle. Typically, the water droplet falling angle $\alpha$ is calculated according to a formula:

$$ R \cdot \gamma \cdot (\cos\theta r - \cos\theta a) = m \cdot g \cdot \sin\alpha $$

where R is an outer peripheral length (whole peripheral length) of the surface of the water droplet which is in contact with the surface of the measurement target 300, $\gamma$ is a surface tension of water, $\theta a$ is a forward contact angle, $\theta r$ is a backward contact angle, m is a mass of water droplet, and g is a gravitational force. Therefore, as shown in Fig. 2, the water droplet falling angle $\alpha$ may be calculated in such a manner that the water droplet that is sliding along the tilted surface is recorded in picture or image, and the outer peripheral length R, the forward contact angle $\theta a$, and the backward contact angle $\theta r$ of the water droplet are measured from the picture or the image. More simply, the forward contact angle $\theta a$ and the backward contact angle $\theta r$ may be measured by, a meter, for example, DYNAMIC WETTING TESTER WET - 600 manufactured by RHESCA COMPANY, to thereby calculate the water droplet falling angle $\alpha$. It shall be appreciated that when the shape of the surface of the water droplet which is in contact with the surface of the measurement target 300 is a substantially circle (perfect circle), the outer peripheral length R may be approximately calculated using a diameter D of the surface (circle) of the water droplet shown in Fig. 2.

In order to enable the water droplet formed on the surface of the gas passage to move under the condition in which the pressure loss of the supply gas is low (e.g., gas pressure of 10kPa), the value of "cos $\theta r$ - cos $\theta a$" is desirably smaller, and more specifically, the water droplet falling angle $\alpha$ desirably meets the condition defined in the present invention.

The separator for the polymer electrolyte fuel cell of the present invention is easily and reliably obtained by using a known separator manufacturing technique including selection of materials, mixing method of the materials, adjusting a mixing ratio of the materials, etc, such as known surface treatment technique (physical surface treatment, chemical surface treatment, etc), provided that the condition of the water droplet falling angle is met.

In particular, the inventors discovered that main cause of difficulty in obtaining stable and high water discharge ability in the conventional compression-molded separator was a surface design conducted chiefly based on (1) rather than (2).

More specifically, the conventional compression-molded separator is manufactured from a mixture containing electrically conductive carbon and a binder. For example, a portion of the gas passage surface which is made of the electrically conductive carbon is highly water-repellent in an initial stage of an operation, but is likely to get wet with time and becomes hydrophilic. Meanwhile, the water-repellency of a portion of the gas passage surface which is made of the binder (synthetic resin) is relatively insufficient. Further, the hydrophilicity or water-repellency of the portion of the gas passage surface which is made of the electrically conductive carbon may vary the physical structure such as the surface roughness. Since the conventional compression-molded separator is surface-designed chiefly according to (1), the illustrated fine chemical structure (e.g., chemical composition that determines hydrophilicity and water-repellency) or fine physical structure (e.g., concave and convex shape that determines center line average height) of the gas passage surface tends to become non-uniform. For example, the portion made of the electrically conductive carbon and the portion made of the binder (synthetic resin) tend to become non-uniform in size and in dispersed state. This correspondingly increases not only a region in which the value of "cos $\theta r$ - cos $\theta a$" is smaller (region in which the water droplet easily moves) but a region in which the value of "cos $\theta r$ - cos $\theta a$" is larger (region in which the water droplet is less likely to move) in the gas passage surface, which makes it extremely difficult to obtain high water discharge ability in the whole gas passage.

Inventors discovered that the compression-molded separator can obtain high water discharge ability by forming the gas passage surface so that non-uniformity of the fine chemical structure (e.g., chemical composition that determines hydrophilicity and water-repellency) of the gas passage surface or non-uniformity of the fine physical structure (e.g., concave and convex shape that determines center line average height) is sufficiently decreased so as to meet the above condition of the water droplet falling angle.

During power generation, the separator passage surface is under high-temperature and wet states. Especially when the separator contains electrically conductive carbon, the hydrophilicity and water-repellency of the separator surface, i.e., contact angle, vary between a dry state and a wet state. This may be due to the fact that the hydrophilicity and water-repellency of carbon vary between the dry state and wet state. It is therefore desirable to use a water droplet equal in amount to the condensed water generated under ambient condition such as an operating state of the polymer electrolyte fuel cell (hereinafter simply referred to as PEFC) when measuring the water droplet falling angle $\alpha$.

However, it is sometimes difficult to correctly reproduce the ambient condition of the PEFC operating condition. Particularly, the ambient condition of the PEFC operating state may vary depending on its operating state, and therefore is difficult to specify. Accordingly, the inventors discovered that through an experiment, etc, accurate reproduction of actual device conditions of the ambient temperature, ambient humidity, and the amount of water droplet was unnecessary for measurement of the water droplet falling angle $\alpha$. That is, the inventors discovered that the water discharge ability of the condensed water of the separator for the PEFC was accurately evaluated based on the water droplet falling angle $\alpha$ measured under predetermined conditions. Specifically, the inventors verified that the water discharge ability of the condensed water of the separator for the PEFC was accurately evaluated based on the water droplet falling angle $\alpha$ measured using the water droplet of not less than 50 $\mu$L and not more than 80 $\mu$L by a meter placed under ambient temperature condition of not lower than 50°C and not higher than 90°C and under ambient humidity condition in which relative humidity is not less than 70% and not more than 100%. This makes it possible to measure the water droplet falling angle $\alpha$ without the necessity of correctly reproducing the actual device condition. As a result, the water discharge ability of the condensed water can be evaluated easily and accurately.

The water droplet falling angle $\alpha$ may alternatively be obtained using the temperature, the relative humidity, and the amount of water droplet as parameters. For example, correlation between the water droplet falling angle, and the temperature, the relative humidity and the amount of water droplet may be found in advance through experiments or the like, and based on the correlation, the water droplet falling angle $\alpha$ may be corrected into a water droplet falling angle $\alpha$ under the ambient condition of the PEFC operating state. Thereby, the water discharge ability of the condensed water can be accurately evaluated.

The present invention has been made based on the above mentioned knowledge. Hereinafter, embodiments of the present invention will be described with reference to the drawings.

(Embodiment 1)

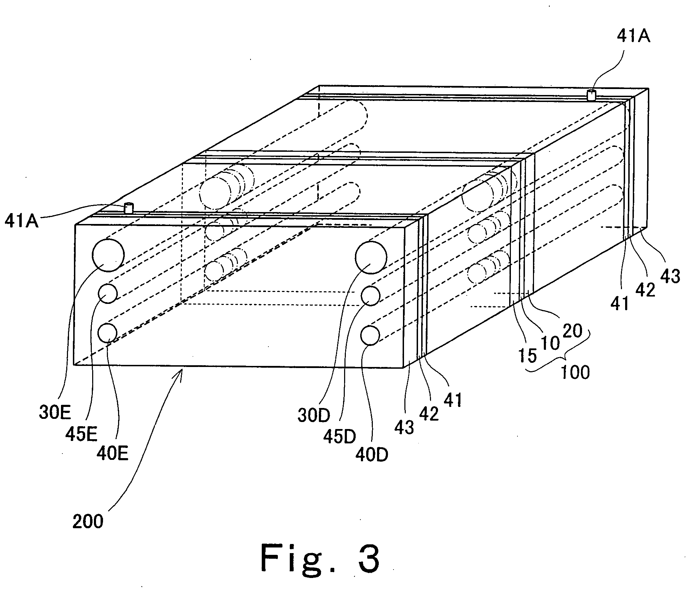

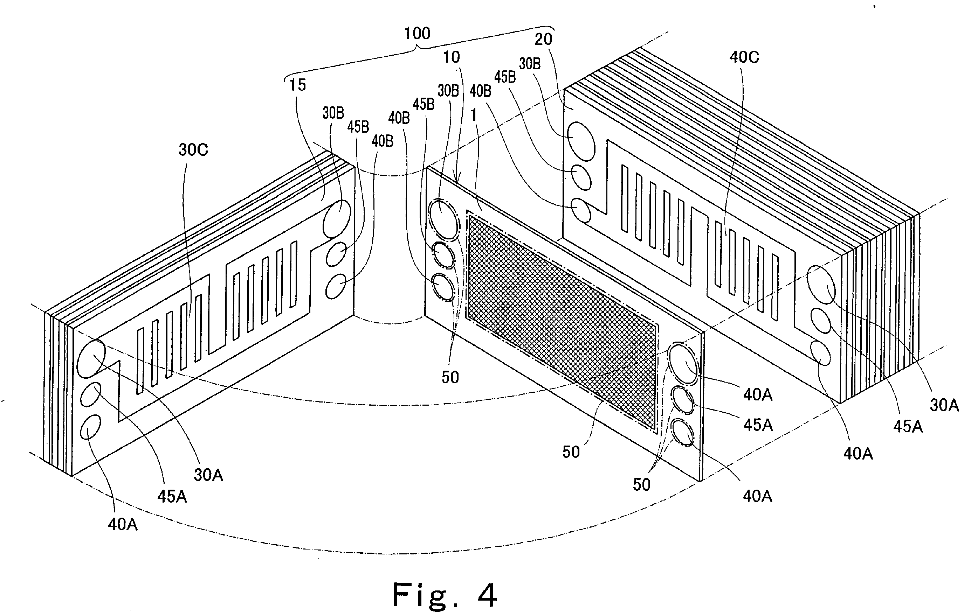

Fig. 3 is a perspective view of a PEFC according to a first embodiment of the present invention. Fig. 4 is an exploded perspective view showing a structure of the PEFC of Fig. 3. In Fig. 4, for the sake of convenience, a stacked structure of a PEFC (stack) 200 is illustrated as being partially exploded.

The PEFC 200 is formed by stacking unit cells (cells) 100 which generate electric power through an electrochemical reaction. Herein, the PEFC 200 is comprised of 100 cells 100.

Each end portion of the cell 100 in the direction in which the cells 100 are stacked is in contact with an end plate 43 with a current collecting plate 41 and an insulating plate 42 interposed between the end portion and the end plate 43. The end plates 43 are fastened from both sides by fastener bolts (not shown), in this embodiment, with a fastening pressure of 10kgf/com$^2$ per electrode area.

Electric terminals 41A of the current collecting plates 41 are connected to an external load such as electric equipment. Through the electric terminals 41A, electric power is output.

The PEFC 200 is provided with an oxidizing gas passage 30 connecting an oxidizing gas supply manifold 30D to an oxidizing gas exhaust manifold 30E and a reducing gas passage 40 connecting a reducing gas supply manifold 40D to a reducing gas exhaust manifold 40E.

The oxidizing gas passage 30 is configured in such a manner that an oxidizing gas is supplied from the oxidizing gas supply manifold 30D and is divided to flow in respective of the stacked cells 100, and thereafter the oxidizing gas gathers and is exhausted outside the PEFC 200 from the oxidizing gas exhaust manifold 30E. The reducing gas passage 40 is configured in the same manner. Herein, oxygen or air is used as the oxidizing gas, and hydrogen or a gas containing hydrogen is used as the reducing gas.

The PEFC 200 is further provided with a coolant supply manifold 45D and a coolant discharge manifold 45E.

The coolant passage 45 is configured in such a manner that a coolant is supplied from the coolant supply manifold 45D and is divided to flow between the respective of the stacked cells 100, and thereafter, the coolant gathers and is discharged outside the PEFC 200 from the coolant discharge manifold 45E.

The cell 100 includes a MEA 10 and separators 15 and 20 which are stacked to form the cell 100. The separator 15 is a cathode separator and the separator 20 is an anode separator. These separators 15 and 20 differ from each other in the passages formed on their surfaces. As shown in Fig. 2, the oxidizing gas passage 30 is formed between the MEA 10 and the cathode separator 15 and the reducing gas passage 40 is formed between the MEA 10 and the anode separator 20.

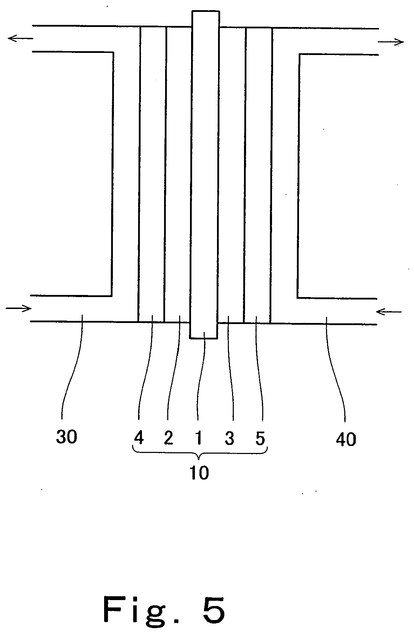

Fig. 5 is a view schematically showing a basic structure of the MEA 10.

The MEA 10 includes a polymer electrolyte membrane 1 comprised of an ion exchange membrane which selectively transmits hydrogen ions, a pair of electrode catalyst layers (oxidizing gas side electrode catalyst layer 2 and reducing gas side electrode catalyst layer 3) which are provided to sandwich the polymer electrolyte membrane 1 and are mainly comprised of carbon powder carrying platinum group metal catalyst thereon, and a pair of diffusion electrode layers (oxidizing gas side diffusion electrode layer 4 and reducing gas side diffusion electrode layer 5) provided on outer surfaces of the pair of electrode catalyst layers. The diffusion electrode layers 4 and 5 are configured to have gas-permeability and electron conductivity, for example, a porous structure.

The oxidizing gas side electrode catalyst layer 2, the oxidizing gas side diffusion electrode layer 4, and the cathode separator 15 form a cathode.

The reducing gas side electrode catalyst layer 3, the reducing gas side diffusion electrode layer 5 and the anode separator 20 form an anode.

The polymer electrolyte membrane 1 is formed by a proton electrically conductive polymer electrolyte membrane (Nafion 112 manufactured by U.S. Dupont) comprised of a thin film which is made of perfluorocarbonsulfonic acid and has a thickness of 50 $\mu$m. Here, its outer size is 20cm $\times$ 20cm.

The diffusion electrode layers 4 and 5 are formed by a carbon cloth. The carbon cloth (TGP-H-090 manufactured by TORAY Co. Ltd) has an outer size of 12cm $\times$ 12 cm and a thickness of 220 $\mu$m. Each diffusion electrode layer 4 (5) is provided on a surface thereof which is in contact with the electrode catalyst layer 2(3) with a water-repellent layer formed by applying a mixture of an aqueous dispersion of polytetrafluoroethylene (PTFE) (D - 1 produced by Daikin Industries Co. Ltd) and carbon black powder and by calcining it at 400°C for 30 minutes.

The electrode catalyst layers 2 and 3 are obtained by applying catalyst paste to the carbon clothes (diffusion electrode layers 4 and 5) by screen printing. The catalyst paste is formed of catalyst powder comprised of acetylene black powder (Denka Black FX-35 produced by Denki Kagaku Co. Ltd) and 25wt% platinum particles with an average particle diameter of about 30 angstrom carried on the acetylene black powder. The catalyst paste is produced by mixing a dispersion solution (Flemion FSS-1 produced by Asahi Glass Co.Ltd) in which perfluorocarbonsulfonic acid is dispersed in ethyl alcohol with a solution in which the catalyst powder is dispersed in isopropanol. The catalyst layers 2 and 3 contain platinum of 0.3mg/cm$^2$ and perfluorocarbonsulfonic acid of 1.0mg/cm$^2$.

The MEA 10 is formed in such a manner that the carbon clothes (diffusion electrode layers 4 and 5) provided with the electrode catalyst layers 2 and 3 are joined by hot pressing to the center portions of both surfaces of the polymer electrolyte membrane 1. The polymer electrolyte membrane 1 is provided on a peripheral region thereof with the oxidizing gas supply manifold hole 30A, the oxidizing gas exhaust manifold hole 30B, the reducing gas supply manifold hole 40A, the reducing gas exhaust manifold hole 40B, the coolant supply manifold hole 45A, and the coolant discharge manifold hole 45B. O-ring shaped gas seal elements 50 manufactured by Biton Co. Ltd are attached to the polymer electrolyte membrane 1 to surround peripheral regions of the diffusion electrode layers 4 and 5 and the manifold holes 30A, 30B, 40A, 40B, 45A, and 45B.

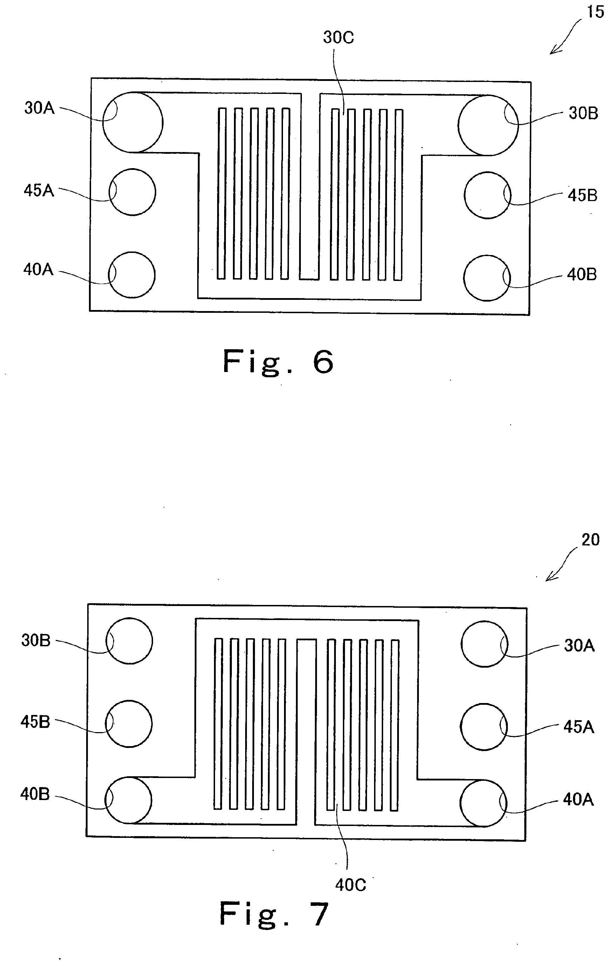

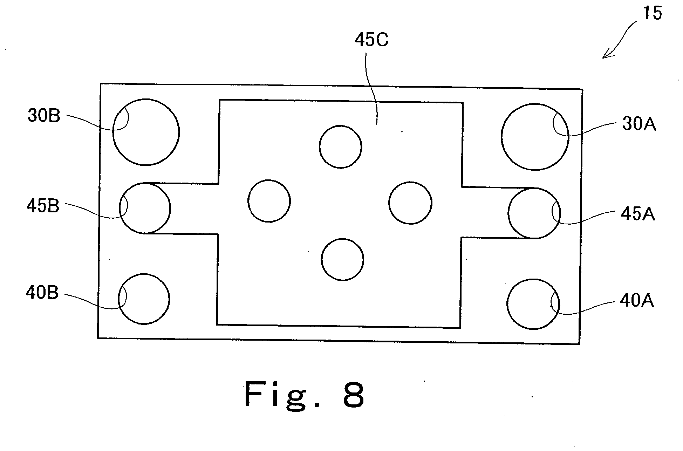

Fig. 6 is a front view showing an oxidizing gas passage pattern of the cathode separator of Fig. 4. Fig. 7 is a front view showing a reducing gas passage pattern of the anode separator of Fig. 4. Fig. 8 is a rear view showing a coolant passage pattern of the cathode separator of Fig. 4.

As shown in Fig. 6, the cathode separator 15 is provided with an oxidizing gas passage groove (reaction gas passage) 30C connecting the oxidizing gas supply manifold hole 30A to the oxidizing gas exhaust manifold hole 30B on a front surface thereof which is in contact with the MEA 10. The oxidizing gas passage groove 30C extends substantially entirely in a region of the cell 100 which is in contact with the oxidizing gas side diffusion electrode layer 4. As shown in Fig. 8, the cathode separator 15 is provided on a back surface thereof with a coolant passage groove (coolant passage) 45C connecting the coolant supply manifold hole 45A to the coolant discharge manifold hole 45B.

As shown in Fig. 7, the anode separator 20 is provided with a reducing gas passage groove (reaction gas passage) 40C connecting the reducing gas supply manifold hole 40A to the reducing gas exhaust manifold 40B on a front surface thereof which is in contact with the MEA 10. The reducing gas passage groove 40C extends entirely in a region of the cell 100 which is in contact with the reducing gas side diffusion electrode layer 5. As in the cathode separator 15, the anode separator 20 is provided on a back surface thereof with the coolant passage groove 45C connecting the coolant supply manifold hole 45A to the coolant discharge manifold hole 45B.

The coolant passage grooves 45C of the cathode separator 15 and the anode separator 20 extend to entirely cool the back surfaces of the oxidizing gas passage groove 30C and the reducing gas passage groove 40C in the cell 100. In a stacked structure of the cells 100, the coolant passage groove 45C of the cathode separator 15 and the coolant passage groove 45C of the anode separator 20 are joined to each other to form the coolant passage 45.

The cathode separator 15 and the anode separator 20 have an equal size of 20cm $\times$ 20cm and an equal thickness of 3mm. As shown in Figs. 6 and 7, the oxidizing gas passage groove 30C and the reducing gas passage groove 40C are configured such that several concave portions having a width of 1.2mm and a depth of 0.7mm are arranged to extend at intervals of 1.0mm. As shown in Fig. 8, the coolant passage groove 45C of the cathode separator 15 is formed to have a large width over the entire back surface of the oxidizing gas passage groove 30C. Flat regions of the back surface of the cathode separator 15 are left at a few points in a center region of the coolant passage groove 45C with the large width. This structure makes it possible to disperse a fastening force in stacking and fastening of the cell 100.

The cathode separator 15 and the anode separator 20 are provided on their peripheral regions with the oxidizing gas supply manifold hole 30A, the oxidizing gas exhaust manifold hole 30B, the reducing gas supply manifold hole 40A, the reducing gas exhaust manifold hole 40B, the coolant supply manifold hole 45A, and the coolant discharge manifold hole 45B so as to correspond to those of the MEA 10. In assembling and cell staking of the cell 100, the oxidizing gas supply manifold holes 30A are coupled to form the oxidizing gas supply manifold 30D, the oxidizing gas exhaust manifold holes 30B are coupled to form the oxidizing gas exhaust manifold 30E, the reducing gas supply manifold holes 40A are coupled to form the reducing gas supply manifold 40D, the reducing gas exhaust manifold holes 40B are coupled to form the reducing gas exhaust manifold 40E, the coolant supply manifold holes 45A are coupled to form the coolant supply manifold 45D, and the coolant discharge manifold holes 45B are coupled to form the coolant discharge manifold 45E.

Here, the material and the surface of the cathode separator 15 and the anode separator 20 which are features of the present invention will be described.

The separators 15 and 20 are formed by mixing electrically conductive carbon with a binder that binds the carbon. The binder may be rubber, resin, etc. The resin is required to be resistant to high-temperature and highly humid environments. Exemplary resin may include epoxy resin, phenol resin, PPS, polypropylene, liquid crystal polymer, PTFE, etc. In this embodiment, a compound containing a mixture of 80wt% artificial graphite powder with an average particle diameter of 100 $\mu$m, 5 wt% carbon black, and 15wt% thermally uncured phenol resin is used. The compound is injected into a metal mold having a transferred shape of the separators 15 and 20. The phenol resin is cured by hot pressing at about 180°C to mold the separators 15 and 20. The surfaces of the separator passage grooves 30C and 40C thus molded are left untreated with skin layers containing the phenol resin in large amount remaining there.

The evaluation method of the separator of the present invention is such that the condensed water discharge ability in the separator is evaluated by measuring the above mentioned water droplet falling angle $\alpha$. Specifically, the condensed water discharge ability in the separators 15 and 20 is evaluated based on the water droplet falling angle $\alpha$ of the water droplet of not less than 50 $\mu$L and not more than 80 $\mu$L which is dropped into the oxidizing gas passage groove 30C or the reducing gas passage groove 40C under conditions in which ambient temperature is not lower than 50°C and not higher than 90°C and relative humidity is not less than 70% and not more than 100%. In this embodiment, the water droplet falling angle $\alpha$ of the water droplet in humid condition at 70°C was about 45 degrees.

In measurement of the water droplet falling angle $\alpha$, it is desired that the lower surface and side surface of the oxidizing gas passage groove 30C or the reducing gas passage groove 40C are flat with respect to the direction in which the water droplet is falling. This makes it possible to reliably inhibit variation in the water droplet falling angle $\alpha$, which would be otherwise caused by the shape such as steps or bent regions. The water droplet is in some cases difficult to discriminate in the wet state, and hence the water droplet angle falling angle $\alpha$ is difficult to directly measure with high accuracy. Accordingly, the water droplet falling angle $\alpha$ may be calculated based the above mentioned formula by measuring the forward contact angle $\theta_a$ and the backward contact angle $\theta_r$ using DYNAMIC WETTING TESTER WET-600 manufactured by RHESCA Corporation.

The surface roughness of the separator passage grooves 30C and 40C is such that center line average height Ra is 0.7. In the dry state, a contact angle $\theta_d$ was about 80 degrees, while in the wet state at 70°C, a contact angle $\theta_w$ was about 60 degrees. In this embodiment, the center line average height was based on a measuring method of JISB0651 using sensing pin surface roughness meter (Form Taysurf -120 manufactured by Taylor Hobson).

Subsequently, an operation of the PEFC 200 constructed above will be described. The oxidizing gas is supplied from the oxidizing gas supply manifold 30D and is divided to flow in the respective cells 100. In the respective cells 100, the oxidizing gas is supplied to the cathode. Here, the oxidizing gas side diffusion electrode layer 4 is exposed to the oxidizing gas. Likewise, hydrogen or the reducing gas containing hydrogen is supplied to the anode. Here, the reducing gas side diffusion electrode layer 5 is exposed to the reducing gas.

The oxidizing gas flows to the oxidizing gas side electrode catalyst layer 2 through the oxidizing gas side diffusion electrode layer 4. In the same manner, the reducing gas flows to the reducing gas side electrode catalyst layer 3 through the reducing gas side diffusion electrode layer 5.

When an electric circuit between the oxidizing gas side electrode catalyst layer 2 and the reducing gas side electrode catalyst layer 3 is established through the cathode separator 15, the anode separator 20, the current collecting plates 41 (see Fig. 1) and an external electric circuit (not shown), oxygen is ionized in the oxidizing gas side electrode catalyst layer 2 because of difference in ionization tendency between the oxygen and the reducing gas. Likewise, hydrogen is ionized in the reducing gas side electrode catalyst layer 3.

The hydrogen ion transmits the polymer electrolyte membrane 1 and is bonded to the oxygen ion in the oxidizing gas side electrode catalyst layer 2 to generate water. The ionization of hydrogen causes an electron to be generated in the reducing gas side electrode catalyst layer 3. The electron travels to its adjacent cell 100 or the external electric circuit (not shown) through the reducing gas side diffusion electrode layer 5 and the anode separator 20 containing the electrically conductive carbon, and thus generates electric power.

(Example 1)

In an example 1, an operation test based on typical fuel utilization ratio and oxygen utilization ratio of the PEFC was conducted using the PEFC 200 according to the first embodiment. The PEFC 200 was kept at 70°C. As the reducing gas, a gas containing 80wt% hydrogen and 20 wt% carbon dioxide was used. The reducing gas was humidified and temperature-increased to have a dew point of 70°C and was supplied from the reducing gas supply manifold 40D. As the oxidizing gas, air was used. The oxidizing gas was humidified and temperature-increased to have a dew point of 70°C and was supplied from the oxidizing gas supply manifold 30D.

Full-load power generation was continued under the condition in which the fuel utilization ratio of the oxidizing gas was 75%, the oxygen utilization ratio of the oxidizing gas was 50%, and current density was 0.3A/cm$^2$. At this time, a pressure loss between the reducing gas supply manifold 40D and the reducing gas exhaust manifold 40E (hereinafter referred to as a reducing gas side pressure loss) was about 7kPa, and a pressure loss between the oxidizing gas supply manifold 30D and the oxidizing gas exhaust manifold 30E (hereinafter referred to as an oxidizing gas side pressure loss) was 6kPa. The PEFC was able to continue to output power of 3.1kW or more (72V - 43.2A) for more than 8000 hours. As used herein, the term "full-load power generation" refers to power generation under a maximum load during which the PEFC can generate power stably and most efficiently.

In the operation test, a low-output operation was carried out while maintaining fuel utilization ratio and oxygen utilization ratio that is substantially equal to those in the full-load power generation, just after start and in every 500 hours. Specifically, partial-load power generation was continued for 24 hours at a reduced current density of 0.0 6A/cm$^2$ while maintaining the fuel utilization ratio at 75% and the oxygen utilization ratio at 50%. At this time, a stable output of the PEFC was maintained without occurrence of voltage oscillation. The current density of 0.0 6A/cm$^2$ is a minimum output state assumed in practice of the PEFC 200.

Subsequently, the limits of the fuel utilization ratio and the oxygen utilization ratio were confirmed while maintaining the current density at 0.0 6A/cm$^2$. Specifically, a limit low output test for reducing the reducing gas side pressure loss or the oxidizing gas side pressure loss was carried out in order to increase the fuel utilization ratio up to higher than 75% or the oxygen utilization ratio up to higher than 50%. As a result, regarding the reducing gas, occurrence of voltage oscillation was confirmed when the fuel utilization ratio became higher than 75%, and regarding the oxidizing gas, occurrence of the voltage oscillation was confirmed when the oxygen utilization ratio became higher than 50%. The reducing gas side limit low pressure loss Pa was 2.5kPa and the oxidizing gas side limit low pressure loss Pc was 2.3kPa under the condition in which the fuel utilization ratio was 75%, the oxygen utilization ratio was 50% and the current density was 0.06A/cm$^2$.

(Comparison 1)

In a comparison 1, a operation test was conducted as in the example 1 using the PEFC 200 of the same type as that of the first embodiment.

The surfaces of the molded separator passage grooves 30C and 40C were subjected to sand blasting. As a result, the skin layers of phenol resin were removed to a depth of approximately several $\mu$m. At this time, the surface roughness (center line average height) of the separator passage grooves 30C and 40C was Ra = 1.5. In the dry state, the contact angle $\theta$d was about 80 degrees, while in the wet state at 70°C, the contact angle $\theta$w was about 30 degrees. In accordance with the evaluation method of the separator of the present invention, the water droplet falling angle $\alpha$ of the water droplet at 70°C in wet state was about 50 degrees.

As a result, during the full-load power generation under the same condition as that of the example 1, in which the fuel utilization ratio was 75%, the oxygen utilization ratio was 50% and the current density was 0.3A/cm$^2$, the reducing gas side pressure loss was about 7kPa and the oxidizing gas side pressure loss was 6kPa. The PEFC was able to continue to output power of 3.1kW or more (72.5V - 43.2A) for more than 8000 hours.

During the partial-load power generation under the same condition as that of the example 1 in which the fuel utilization ratio was 75%, the oxygen utilization ratio was 50%, and the current density was 0.0 6A/cm$^2$, the voltage oscillation occurred in some of the cells every several to several tens minutes. The range of the voltage oscillation was about 100mV. Accordingly, the limit condition in which occurrence of the voltage oscillation is inhibited, i.e., the limit low-pressure loss was examined under the condition in which the reducing gas side pressure loss or the oxidizing gas side pressure loss was increased, in order to reduce the fuel utilization ratio and the oxygen utilization ratio. As a result, the reducing gas side limit low pressure loss Pa was 2.8kPa and the oxidizing gas side limit low pressure loss Pc was 2.6kPa.

**(Embodiment 2)**

A PEFC 200 according to a second embodiment of the present invention is identical to that of the first embodiment except for surface treatment of the cathode separator 15 and the anode separator 20. Specifically, the separators 15 and 20 are molded as in the first embodiment. The separator passage grooves 30C and 40C have surfaces subjected to multistep blasting. As used herein, the term "multistep blasting" refers to multistage blasting that uses particles with a smaller particle diameter in later blasting. By way of example, initially, wet blasting is conducted using alumina particles with a relatively large diameter. Following this, wet blasting is conducted several times using alumina particles with a smaller particle diameter. It shall be appreciated that, since sand blasting using a gas as a carrier is unsuitable for blasting using fine alumina particles, wet blasting using a liquid as a carrier is used. In this embodiment, wet blasting cleaning device (manufactured by Macoho Co., Ltd) is used.

The multistep blasting is controlled to adjust the water droplet falling angle $\alpha$ of the surfaces of the separator passage grooves 30C and 40C. In this embodiment, the multistep blasting is conducted so that the surface roughness (center line average height) Ra of the separator passage grooves 30C and 40C is Ra = 3 to 7, thereby adjusting the water droplet falling angle $\alpha$ according to the evaluation method of the present invention to be 45 degrees or less. The reason why such effect is produced has not yet been made clear. But, the inventors presume that the multistep blasting forms finer concave and convex portions on fine concave and convex portions on the surfaces of the separator passage grooves 30C and 40C, i.e., plural-stage concave and convex structure. It is presumed that the multistage concave and convex structure increases a specific surface area, leading to reduction, i.e., improvement of the water droplet falling angle $\alpha$.

The correlation between the surface roughness (center line average height) Ra and the water droplet falling angle $\alpha$ is described above. A specific correlation varies depending on the material of the separator.

**(Example 2)**

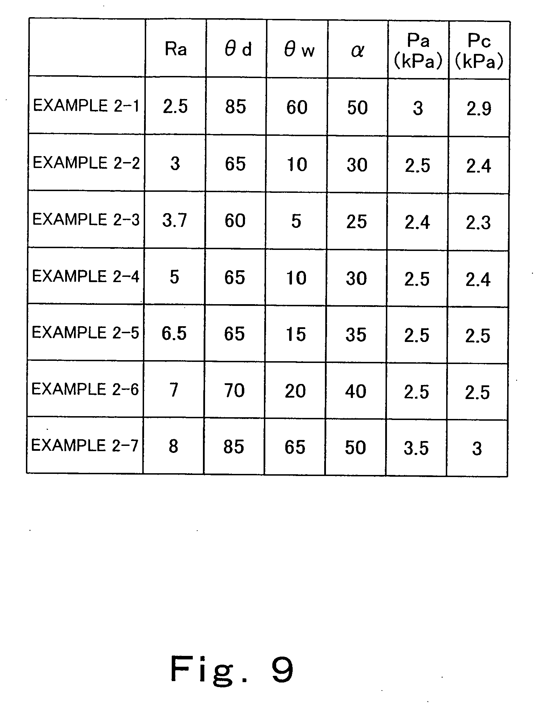

In an example 2, an operation test was conducted as in the example 1 using the PEFC 200 according to the second embodiment. The multistep blasting was conducted until the surface roughness (center line average height) of the separator passage grooves 30C and 40C of the separators 15 and 20 became Ra = 3.7 (corresponding to example 2 - 3 of Fig. 9). The water droplet falling angle $\alpha$ according to the evaluation method of the separator of the present invention was 25 degrees.

During the full-load power generation under the condition in which the fuel utilization ratio was 75%, the oxygen utilization ratio was 50%, and the current density was 0.3A/cm$^2$, the reducing gas side pressure loss was about 7kPa and the oxidizing gas side pressure loss was 6kPa, and the PEFC was able to continue to output power of 3.1kW or more (72.3V - 43.2A) for more than 8000 hours.

During the partial-load power generation under the same condition as that of the example 1 in which the fuel utilization ratio was 70%, the oxygen utilization ratio was 50% and the current density was 0.06A/cm$^2$, a stable output of the PEFC was maintained transitions without occurrence of the voltage oscillation.

Subsequently, as in the example 1, the limit low output test was conducted while maintaining the cell density at 0.06A/cm$^2$. As a result, regarding the reducing gas, occurrence of the voltage oscillation was confirmed when the fuel utilization ratio became higher than 80%. Also, regarding the oxidizing gas, occurrence of the voltage oscillation was confirmed when the oxygen utilization ratio became higher than 55%. The reducing gas side limit low pressure loss Pa was 2.4kPa and the oxidizing gas side limit low pressure loss Pc was 2.3kPa under the condition in which the fuel utilization ratio was 80%, the oxygen utilization ratio was 55% and the current density was 0.06A/cm$^2$.

The multistep blasting was controlled and a similar operation test was conducted using the separators 15 and 20 having the separator passage grooves 30C and 40C with different surface roughness (center line average height) Ra.

Fig. 9 is a view showing the characteristic of the separator and the PEFC according to the second embodiment using the surface roughness (center line average height) Ra as a parameter.

As shown in Fig. 9, when the surface roughness (center line average height) of the separator passage grooves 30C and 40C were Ra = 2.5 and 8 (examples 2 - 1 and 2 - 7), the corresponding water droplet falling angles $\alpha$ according to the evaluation method of the present invention were both 50 degrees, Pa were 3kPa and 3.5kPa and Pc were 2.9kPa and 3kPa. During the partial load power generation, the output of the PEFC was not stabilized unless the fuel utilization ratio and the oxygen utilization ratio were reduced.

**(Embodiment 3)**

A PEFC 200 according to a third embodiment of the present invention is identical to that of the second embodiment except for surface treatment of the cathode separator 15 and the anode separator 20. Specifically, the separators 15 and 20 are molded as in the first embodiment, and the separator passage grooves 30C and 40C have surfaces subjected to the multistep blasting as in the second embodiment.

After completion of the multistep blasting, oxygen plasma treatment is conducted by a plasma cleaning device (PC - 1000 manufactured by SAMCO). The surface roughness (center line average height) of the separator passage grooves 30C and 40C which have been subjected to the oxygen plasma treatment was substantially equal to that of the second embodiment, and Ra = 3.7. However, in the dry state, the contact angle $\theta$d was about 10 degrees, while in the wet state at 70°C, the contact angle $\theta$w was about 0 degree, i.e., was incapable of being measured. In accordance with the evaluation method of the separator of the present invention, the water droplet falling angle $\alpha$ of the water droplet at 70°C in wet state is about 5 degrees. That is, the plasma treatment improves the water droplet falling angles $\alpha$ of the surfaces of the separator passage grooves 30C and 40C of the example 2 - 3 of Fig. 9.

The reason why such effects are produced have not yet been made clear. So, the inventors analyzed the surfaces of the separator passage grooves 30C and 40C using a XPS (X-ray Photoelectron Spectroscopy), and found that oxide functional group, i.e., hydrophilic functional group represented by chemical formulae 1 and 2 were given to the carbon surfaces.

[formula 1]          - C = O

[formula 2]          - C - OH

The inventors presume that the hydrophilic functional groups increased polarities of the surfaces of the separator passage grooves 30C and 40C and the surfaces became hydrophilic, leading to improvement of the water droplet falling angle $\alpha$. Therefore, it is easily presumed that the water droplet falling angles $\alpha$ of the surfaces of the separator passage grooves 30C and 40C can be improved by chemically bonding hydrophilic or water-repellent functional groups to the surfaces of the separator passage grooves 30C and 40C. For example, UV ozone treatment in which ultraviolet light is radiated in ozone atmosphere allows an increase in the polarities of the surfaces of the separator passage grooves 30C and 40C, and hence allows improvement the water droplet falling angle $\alpha$. In addition, fluorine plasma treatment allows fluoride functional groups to be chemically bonded to graphite on the surfaces of the separator passage grooves 30C and 40C, and hence allows an increase in water repellency of the surfaces of the separator passage grooves 30C and 40C, i.e., improvement of the water droplet falling angle $\alpha$.

In these plasma treatments, plasma may be radiated in atmospheric pressure without reducing pressure. The plasma treatment device may be a parallel and flat type in which electrodes are opposed in parallel to each other or may be a barrel type in which electrodes are provided on side surfaces of a cylindrical chamber.

A preservation method of the separators 15 and 20 having hydrophilic functional groups in large quantity on the surfaces thereof will be described. In order to prevent or inhibit water-repellent organic substances or the like in air from adhering to the hydrophilic functional groups, it is desirable to preserve these separators 15 and 20 in vacuum. It has been found that the hydrophilicity of the surfaces of the separator groove passages 30C and 40C varies depending on how to package the separators 15 and 20.

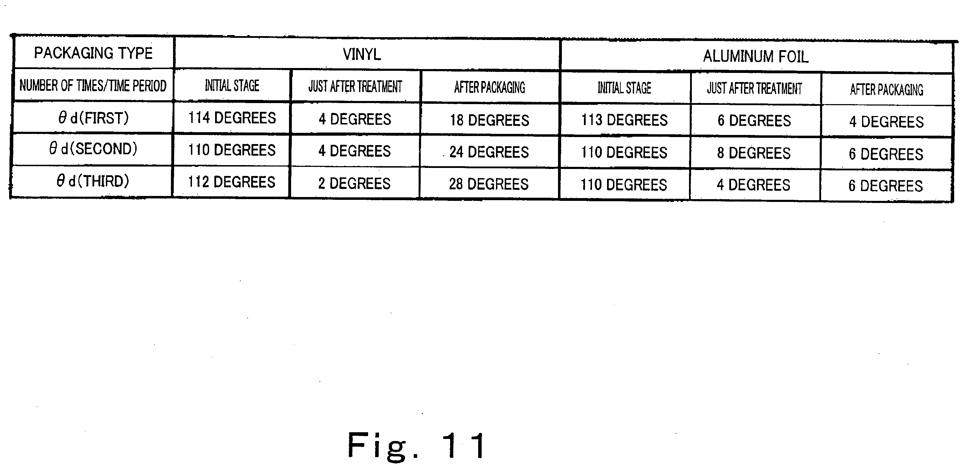

Fig. 11 is a view showing comparison of the contact angles $\theta$d in the dry state of the surfaces of the separator passage grooves, which vary depending on how to package the separators of this embodiment. As shown in Fig. 11, the separators 15 and 20 were packaged in vacuum within commercially available polyethylene bag and aluminum foil. After about 1 hour, the separators 15 and 20 were taken out and the contact angles $\theta$d of the separator passage grooves 30C and 40C were measured three times. It was found that the contact angles $\theta$d of the separators 15 and 20 packaged within the polyethylene bag increased and hydrophilicity decreased. On the other hand, it was found that the contact angles $\theta$d of the separators 15 and 20 packaged within the aluminum foil were all maintained at 10 degrees or less. The reason why the such effects are produced has not yet been made clear. The inventors presume that, since carbon products forming the surfaces of the separator passage grooves 30C and 40C are organic substances, the hydrophilic functional groups on the surfaces thereof decrease by contact with the polyethylene bag or the like which are made of organic substances, while since the aluminum foil made of inorganic substances is different in chemical composition from the carbon products made of organic substances, the hydrophilic functional groups of the surfaces of the separator passage grooves 30C and 40C do not decrease by contact with the aluminum foil. From the above, it is assumed that the separators having hydrophilic functional groups in large quantities on the surfaces of the separator passage grooves 30C and 40C are suitably packaged within an inorganic material and in vacuum.

Furthermore, a synergistic effect of the multistep blasting and the oxygen plasma treatment will be described.

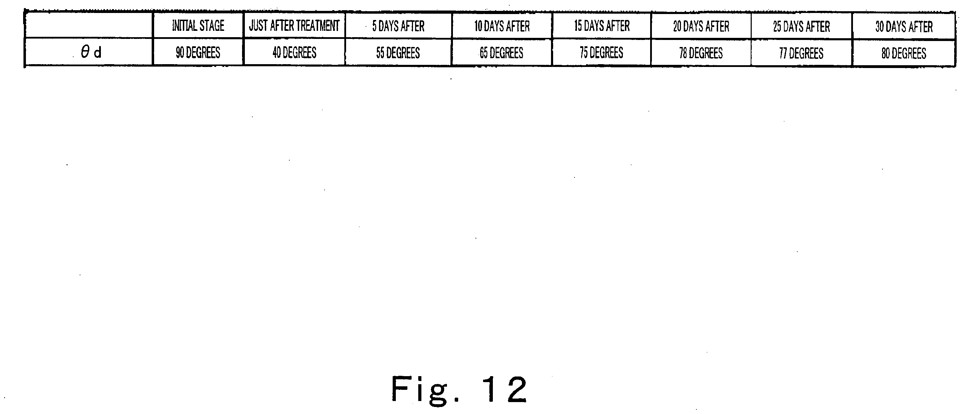

Fig. 12 is a view showing time-lapse change of the contact angle $\theta$d in the dry state of a surface of a separator passage groove of a separator which has been subjected to oxygen plasma treatment without the multistep blasting. As shown in Fig. 12, the contact angle $\theta$d just after the oxygen plasma treatment was 40 degrees, and hence sufficient hydrophilicity was not obtained. 5 days after that, the contact angle $\theta$d increased by 10 degrees or more, and finally up to about 80 degrees.

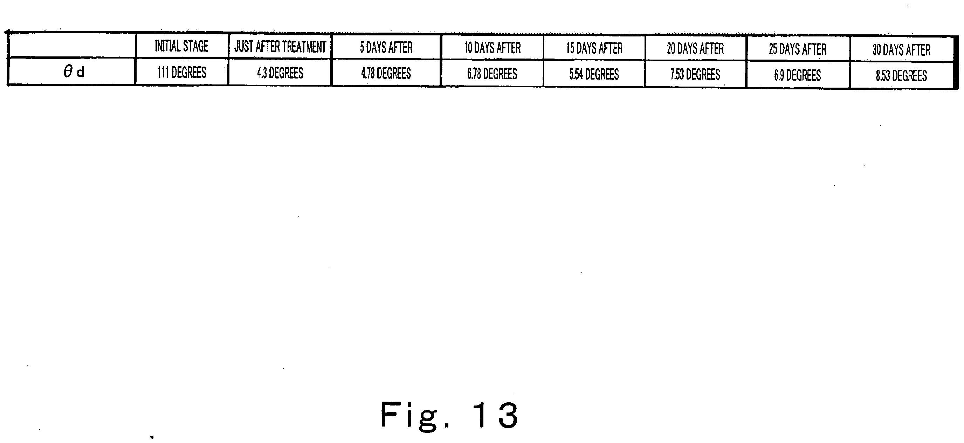

Fig. 13 is a view showing time-lapse change of the contact angle $\theta$d in the dry state of a surface of a separator passage groove of a separator which has been subjected to both the multistep blasting and the oxygen plasma treatment. As shown in Fig. 13, the contact angle $\theta$d just after the oxygen plasma treatment was less than 10 degrees, and its effect continued after an elapse of 30 days. The reason why such an effect are produced has not yet been made clear. The inventors presume that finer concave and convex portions are formed within the multistage concave and convex structure formed by the multistep blasting because of etching effect produced by the oxygen plasma treatment, increasing the specific surface areas of the separator passage grooves 30C and 40C. It may be assumed that, since the surfaces of the separator passage grooves 30C and 40C with larger specific surface areas are subjected to oxygen plasma treatment, more hydrophilic functional groups are formed on the surfaces of the separator passage grooves 30C and 40C, and contribute to continuity of hydrophilicity.

**(Example 3)**

In an example 3, an operation test was conducted as in the example 1 using the PEFC 200 according to the third embodiment.

During the full-load power generation under the condition in which the fuel utilization ratio was 75%, the oxygen utilization ratio was 50%, and the current density was 0.3A/cm$^2$, the reducing gas side pressure loss was about 7kPa, the oxidizing gas side pressure loss was 6kPa, and the PEFC was able to continue to output power of 3.1kW or more (72.6V - 43.2A) for more than 8000 hours.

During the partial-load power generation under the condition in which the fuel utilization ratio was 75%, the oxygen utilization ratio was 50% and the current density was 0.06A/cm$^2$, a stable output of the PEFC was maintained without occurrence of the voltage oscillation.

Subsequently, as in the example 1, the limit low output test was conducted while maintaining the cell density at 0.06A/cm$^2$. As a result, regarding the reducing gas, occurrence of the voltage oscillation was confirmed when the fuel utilization ratio became higher than 90%. Also, regarding the oxidizing gas, occurrence of the voltage oscillation was confirmed when the oxygen utilization ratio became higher than 65%. The reducing gas side limit low pressure loss Pa was 2.1kPa and the oxidizing gas side limit low pressure loss Pc was 2.0kPa under the condition in which the fuel utilization ratio was 90%, the oxygen utilization ratio was 65% and the current density was 0.06A/cm$^2$.

**(Embodiment 4)**

A PEFC 200 according to a fourth embodiment of the present invention is identical to that of the first embodiment except for materials and surface treatment of the cathode separator 15 and the anode separator 20.

The separators 15 and 20 are comprised of a compound containing a mixture of 79wt% artificial graphite powder with an average particle diameter of 100$\mu$m, 5wt% carbon black, 2wt% high-purity alumina particles with an average particle diameter of 0.5$\mu$m, and 14wt% thermally uncured phenol resin. The compound is injected into a metal mold having transferred shapes of the separators 15 and 20. The phenol resin is cured by hot pressing at about 180°C to mold the separators 15 and 20.

The separator passage grooves 30C and 40C have surfaces subjected to the multistep blasting as in the second embodiment. The surface roughness (center line average height) of the separator passage grooves 30C and 40C is Ra = 6.5.

As a result, in the dry state, the contact angle $\theta$d was about 20 degrees, while in the wet state at 70°C, the contact angle $\theta$w was about 0 degree, i.e., was incapable of being measured. In accordance with the evaluation method of the separator of the present invention, the water droplet falling angle $\alpha$ of the water droplet at 70°C in wet state is about 10 degrees.

**(Example 4)**

In an example 4, an operation test was conducted as in the example 1 using the PEFC 200 according to the fourth embodiment.

As a result, during the full-load power generation under the condition in which the fuel utilization ratio was 75%, the oxygen utilization ratio was 50%, and the current density was 0.3A/cm$^2$, the reducing gas side pressure loss was about 7kPa and the oxidizing gas side pressure loss was 6kPa, and the PEFC was able to continue to output power of 3.1kW or more (72.3V - 43.2A) for more than 8000 hours.

During the partial-load power generation under the condition in which the fuel utilization ratio was 75%, the oxygen utilization ratio was 50% and the current density was 0.06A/cm$^2$, a stable output of the PEFC was maintained without occurrence of the voltage oscillation.

Subsequently, partial-load power generation was carried out with the fuel utilization ratio increased up to higher than 75% or the oxygen utilization ratio increased up to higher than 50% while maintaining the current density at 0.06A/cm$^2$. As a result, regarding the reducing gas, occurrence of the voltage oscillation was confirmed when the fuel utilization ratio became higher than 85%. Also, regarding the oxidizing gas, occurrence of voltage oscillation was confirmed when the oxygen utilization ratio became higher than 60%.

The reducing gas side limit low pressure loss Pa was 2.2kPa and the oxidizing gas side limit low pressure loss Pc was 2.1kPa under the condition in which the fuel utilization ratio was 85%, the oxygen utilization ratio was 60% and the current density was 0.06A/cm$^2$.

**(Embodiment 5)**

A PEFC 200 according to a fifth embodiment of the present invention is identical to that of the first embodiment except for materials and surface treatment of the cathode separator 15 and the anode separator 20.

The separators 15 and 20 are comprised of a compound containing a mixture of 79wt% artificial graphite powder with an average particle diameter of 100$\mu$m, 5wt% carbon black, 2wt% high-purity titanium particles with an average particle diameter of 0.5$\mu$m, and 14wt% thermally uncured phenol resin. The compound is injected into a metal mold having transferred shapes of the separators 15 and 20. The phenol resin is cured by hot pressing at about 180°C to mold the separators 15 and 20.

The separator passage grooves 30C and 40C have surfaces subjected to the multistep blasting as in the second embodiment. The surface roughness (center line average height) of the separator passage grooves 30C and 40C is Ra = 6.5.

As a result, in the dry state, the contact angle $\theta$d is about 20 degrees, while in the wet state at 70°C, the contact angle $\theta$w is about 0 degree, i.e., is incapable of being measured. In accordance with the evaluation method of the separator of the present invention, the water droplet falling angle $\alpha$ of the water droplet at 70°C in wet state is about 10 degrees.

**(Example 5)**

In an example 5, an operation test was conducted as in the example 1 using the PEFC 200 according to the fifth embodiment.

As a result, the reducing gas side pressure loss was about 7kPa, the oxidizing gas side pressure loss was 6kPa, and the PEFC was able to continue to output power of 3.1kW or more (72.3V - 43.2A) for more than 8000 hours under the condition in which the fuel utilization ratio was 75%, the oxygen utilization ratio was 50%, and the current density was 0.3A/cm$^2$.

During the partial-load power generation under the condition in which the fuel utilization ratio was 75%, the oxygen utilization ratio was 50% and the current density was 0.0 6A/cm$^2$, a stable output of the PEFC was maintained without occurrence of the voltage oscillation.

As in the example 1, the limit low output test was conducted while maintaining the cell density at 0.06A/cm$^2$. As a result, regarding the reducing gas, occurrence of the voltage oscillation was confirmed when the fuel utilization ratio became higher than 85%. Also, regarding the oxidizing gas, occurrence of the voltage vibration was confirmed when the oxygen utilization ratio became higher than 60%. The reducing gas side limit low pressure loss Pa was 2.2kPa and the oxidizing gas side limit low pressure loss Pc was 2.1kPa under the condition in which the fuel utilization ratio was 85%, the oxygen utilization ratio was 60% and the current density was 0.06A/cm$^2$.

**(Embodiment 6)**

A PEFC 200 according to a sixth embodiment of the present invention is identical to that of the first embodiment except for materials of the cathode separator 15 and the anode separator 20.

The separators 15 and 20 are formed of a compound containing a mixture of 79wt% artificial graphite powder with an average particle diameter of 100$\mu$m, 5wt% carbon black, 2wt% PTFE powder, and 14wt% thermally uncured epoxy resin. The compound is injected into a metal mold having transferred shapes of the separators 15 and 20. The epoxy resin is cured by hot pressing at about 180°C to mold the separators 15 and 20.

The surfaces of the separator passage grooves 30C and 40C thus manufactured are left untreated with the skin layers of the epoxy resin remaining there. The surface roughness (center line average height) of the separator passage grooves 30C and 40C is Ra = 0.8. In the dry state, the contact angle $\theta$d is about 110 degrees, while in the wet state at 70°C, the contact angle $\theta$w is about 100 degrees. In accordance with the evaluation method of the separator of the present invention, the water droplet falling angle $\alpha$ of the water droplet at 70°C in wet state is about 20 degrees.

**(Example 6)**

In an example 6, an operation test was conducted as in the example 1 using the PEFC 200 according to the sixth embodiment.

As a result, during the full-load power generation under the condition in which the fuel utilization ratio was 75%, the oxygen utilization ratio was 50%, and the current density was 0.3A/cm$^2$, the reducing gas side pressure loss was about 7kPa, the oxidizing gas side pressure loss was 6kPa, and the PEFC was able to continue to output power of 3.1kW or more(72.3V - 43.2A) for more than 8000 hours.

During the partial-load power generation under the condition in which the fuel utilization ratio was 75%, the oxygen utilization ratio was 50% and the current density was 0.06A/cm$^2$, a stable output of the PEFC was maintained without occurrence of the voltage oscillation.

As in the example 1, the limit low output test was conducted while maintaining the current density at 0.06A/cm$^2$. As a result, regarding the reducing gas, occurrence of the voltage oscillation was confirmed when the fuel utilization ratio became higher than 80%. Also, regarding the oxidizing gas, occurrence of the voltage oscillation was confirmed when the oxygen utilization ratio became higher than 55%. The reducing gas side limit low pressure loss Pa was 2.3kPa, and the oxidizing gas side limit low pressure loss Pc was 2.2kPa under the condition in which the fuel utilization ratio was 80%, the oxyger utilization ratio was 55% and the current density was 0.06A/cm$^2$.

**(Comparison 2)**

In a comparison 2, an operation test was conducted as in the example 1 using the PEFC 200 of the same type as that of the sixth embodiment.

The surfaces of the separator passage grooves 30C and 40C molded were subjected to multistep blasting as in the second embodiment. The surface roughness (center line average height) of the separator passage grooves 30C and 40C was Ra = 6.3. In the dry state, the contact angle $\theta$d was about 110 degrees, while in the wet state at 70°C, the contact angle $\theta$w was about 100 degrees. In accordance with the evaluation method of the present invention, the water droplet falling angle $\alpha$ of the water droplet at 70°C in wet state was about 50 degrees.

As a result, during the full-load power generation under the condition in which the fuel utilization ratio was 75%, the oxygen utilization ratio was 50% and the current density was 0.3A/cm$^2$, the reducing gas side pressure loss was about 7kPa, the oxidizing gas side pressure loss was 6kPa, and the PEFC was able to continue to output power of 3.1kW or more (72.3V - 43.2A) for more than 8000 hours.

During the partial-load power generation under the condition in which the fuel utilization ratio was 75%, the oxygen utilization ratio was 50%, and the current density was 0.06A/cm$^2$, the voltage oscillation occurred in some of the cells every several to several tens minutes. The voltage oscillation range was about 70mV. Accordingly, the limit condition in which occurrence of the voltage oscillation is inhibited, i.e., the limit low-pressure loss was examined under the condition in which the reducing gas side pressure loss or the oxidizing gas side pressure loss was increased, in order to reduce the fuel utilization ratio and the oxidizing utilization ratio. As a result, the reducing gas side limit low pressure loss Pa was 2.7kPa and the oxidizing gas side limit low pressure loss Pc was 2.5kPa.

Here, results of the above described examples and comparisons will be summarized.

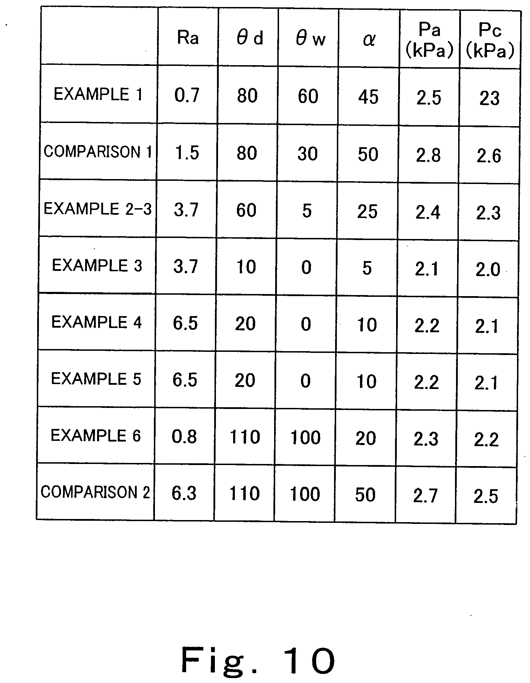

Fig. 10 is a view showing characteristics of the separators and PEFCs of the examples 1 through 6 and the comparisons 1 and 2. In order to maintain the fuel utilization ratio and the oxidization utilization ratio which are substantially as high as those in the rated output during the full-load power generation, the reducing gas side limit low pressure loss PA is required to be 2.5kPa or less and the oxidizing gas side limit low pressure loss Pc is required to be 2,.3kPa or less. As shown in Fig. 10, such a condition is met when the water droplet falling angle $\alpha$ according to the evaluation method of the separator of the present invention is in a range of 5 to 45 degrees.

It has been conformed that deviation from a design value of a size of the gas passage actually manufactured is sufficiently reduced when the surface roughness (center line average height) Ra was Ra = 4.0$\mu$m or less irrespective of the shape of the separator passage grooves 30C and 40C in the separators 15 and 20, i.e., the separators containing the electrically conductive carbon and the binder that binds the electrically conductive carbon.

As described in the third embodiment, the oxygen plasma treatment is effective in improving the water droplet falling angle $\alpha$ of the separators 15 and 20, i.e., the separators made of the material containing the electrically conductive carbon and the binder that binds the electrically conductive carbon. The oxygen plasma treatment more effectively improves the water droplet falling angle $\alpha$ when the surface has Ra = 1.5 or more. This may be due to the fact that, since surface roughness, i.e., fine concave and convex portions are sufficiently formed when the surface has Ra = 1.5$\mu$m or more, the oxygen plasma treatment sufficiently forms functional groups. It is therefore desired that the surface of the separator passage grooves 30C and 40C have Ra = 1.5$\mu$m or more.

In brief, when the center line average height of the surfaces of the separator passage grooves 30C and 40C is not less than 1.5$\mu$m and not more than 4.0$\mu$m, the separators 15 and 20 are easily configured compactly for practical use, and deviation from the design value of the size of the gas passages actually manufactured can be sufficiently reduced. In addition, the water droplet falling angle $\alpha$ is well improved by the oxygen plasma treatment. Since the separators of the present invention has high condensed water discharge ability under the condition in which the pressure loss of the supply gas is low, they are suitable for use as the separators for the PEFC.

When the surfaces of the separator passage grooves 30C and 40C have fine convex portions with a pitch of substantially 5$\mu$m or less, great oscillation of the pressure loss which would be otherwise caused by the condensed water anchored by the surfaces of the separator passage grooves 30C and 40C is inhibited more effectively. Therefore, when the surfaces of the separator passage grooves 30C and 40C have fine convex portions with a pitch of substantially 5$\mu$m or less, the oscillation of the pressure loss of the supply reaction gas can be inhibited under the condition in which the pressure loss of the supply reaction gas is low. As a result, oscillation of power output from the PEFC 100 can be inhibited.

Although the embodiments of the present invention have been described, the present invention is not intended to be limited to these embodiments, and modification and alternative embodiments of the invention will be apparent to those skilled in the art within the scope of the claimed inventions.

## Brief Description of the Drawings

Fig. 1 is a view schematically showing a method of measuring a water droplet falling angle;

Fig. 2 is a view schematically showing a method of indirectly measuring the water droplet falling angle;

Fig. 3 is a perspective view of a PEFC according to a first embodiment;

Fig. 4 is an exploded perspective view showing a structure of the PEFC of Fig. 3;

Fig. 5 is a schematic view showing a basic structure of a cell;

Fig. 6 is a front view showing an oxidizing gas passage pattern of a cathode separator of Fig. 4;

Fig. 7 is a front view showing a reducing gas passage pattern of an anode separator of Fig. 4;

Fig. 8 is a rear view showing a coolant passage pattern of the cathode separator of Fig. 4;

Fig. 9 is a view showing characteristics of a separator and a PEFC according to a second embodiment of the present invention using surface roughness (center line average height) Ra as a parameter;

Fig. 10 is a view showing characteristics of separators and PEFCs of examples 1 to 6 and comparison examples 1 and 2;

Fig. 11 is a view showing comparison of a contact angle $\theta$d in a dry state of a separator passage groove surface based on difference of a packaging method of the separator of this embodiment;

Fig. 12 is a view showing time-lapse change of the contact angle $\theta$d in a dry state of a separator passage groove surface of a separator which has been subjected to oxygen plasma treatment without a multistep blasting; and

Fig. 13 is a view showing time-lapse change of the contact angle $\theta$d in a dry state of a surface of a separator passage groove of a separator which has been subjected to the multistep blasting and the oxygen plasma treatment.

## Explanation of Reference Numerals

| | |
|---|---|
| 1 | polymer electrolyte membrane |
| 2 | oxidizing gas side electrode catalyst layer |
| 3 | reducing gas side electrode catalyst layer |
| 4 | oxidizing gas side diffusion electrode layer |
| 5 | reducing gas side diffusion electrode layer |
| 10 | MEA |
| 15 | cathode separator |
| 20 | anode separator |
| 30 | oxidizing gas passage |
| 30A | oxidizing gas supply manifold hole |
| 30B | oxidizing gas exhaust manifold hole |
| 30C | oxidizing gas passage groove (separator passage groove) |
| 30D | oxidizing gas supply manifold |

| 30E | oxidizing gas exhaust manifold |
|---|---|
| 40 | reducing gas passage |
| 40A | reducing gas supply manifold hole |
| 40B | reducing gas exhaust manifold hole |
| 40C | reducing gas passage groove (separator passage groove) |
| 40D | reducing gas supply manifold |
| 40E | reducing gas exhaust manifold |
| 41 | current collecting plate |
| 41A | electric terminal |
| 42 | insulating plate |
| 43 | end plate |
| 45 | coolant passage |
| 45A | coolant supply manifold hole |
| 45B | coolant discharge manifold hole |
| 45C | coolant passage groove |
| 45D | coolant supply manifold |
| 45E | coolant discharge manifold |
| 50 | gas seal member |
| 100 | cell |
| 200 | polymer electrolyte fuel cell (PEFC) |
| 300 | measurement target |
| 310 | water droplet |
| $\theta$d | contact angle in a dry state |
| $\theta$w | contact angle in a humid state at a temperature of 70°C |
| $\theta$a | forward contact angle |
| $\theta$r | backward contact angle |
| $\alpha$ | water droplet angle |
| Pa | reducing gas side limit low pressure loss |
| Pc | oxidizing gas side limit low pressure loss |

**Claims**

1. A separator for a polymer electrolyte fuel cell, which contains electrically conductive carbon and a binder that binds the electrically conductive carbon, the separator comprising:
   a reaction gas passage formed on at least a main surface thereof, wherein a water droplet falling angle of a surface of the reaction gas passage is not less than 5 degrees and not more than 45 degrees when a water droplet of not less than 50 $\mu$L and not more than 80 $\mu$L is dropped under a condition in which ambient temperature is not lower than 50°C and not higher than 90°C and relative humidity is not less than 70% and not more than 100%, and wherein the surface of the reaction gas passage has a center line average height of not less than 1.5 $\mu$m and not more than 4.0 $\mu$m.

2. The separator for the polymer electrolyte fuel cell according to claim 1, wherein fine convex portions of the center line average height of the reaction gas passage has a pitch of substantially 5 $\mu$m or less.

3. The separator for the polymer electrolyte fuel cell according to claim 1, wherein the surface of the reaction gas passage is formed by blasting, a laser process, or a molding process.

4. The separator for the polymer electrolyte fuel cell according to claim 1, wherein the surface of the reaction gas passage is formed by multistep blasting.

5. The separator for the polymer electrolyte fuel cell according to claim 1, wherein the surface of the reaction gas passage is formed by an oxygen plasma treatment.

6. The separator for the polymer electrolyte fuel cell according to claim 1, wherein the separator is formed by compression molding a mixture containing the electrically conductive carbon and the binder.

7. A polymer electrolyte fuel cell comprising a separator for a polymer electrolyte fuel cell according to claim 1.

**Patentansprüche**

1. Trennglied für eine Polymerelektrolyt-Brennstoffzelle, das elektrisch leitenden Kohlenstoff und ein Bindemittel, das den elektrisch leitenden Kohlenstoff bindet, enthält, wobei das Trennglied umfasst:
   einen Reaktionsgasdurchgang, der auf mindestens einer Hauptoberfläche davon ausgebildet ist, wobei ein Wassertropfenfallwinkel einer Oberfläche des Reaktionsgasdurchgangs nicht weniger als 5 Grad und nicht mehr als 45 Grad beträgt, wenn ein Wassertropfen von nicht weniger als 50 $\mu$L und nicht mehr als 80 $\mu$L unter Bedingungen fallengelassen wird, bei denen die Umgebungstemperatur nicht niedriger als 50 °C und nicht höher als 90 °C ist und die relative Feuchtigkeit nicht weniger als 70 % und nicht mehr als 100 % beträgt, und wobei die Oberfläche des Reaktionsgasdurchgangs einen arithmetischen Mittenrauwert von nicht weniger als 1,5 $\mu$m und nicht mehr als 4,0 $\mu$m aufweist.

2. Trennglied für eine Polymerelektrolyt-Brennstoffzelle gemäß Anspruch 1, wobei feine konvexe Abschnitte des arithmetischen Mittenrauwerts des Reaktionsgasdurchgangs eine Steigung von im Wesentlichen 5 $\mu$m oder weniger aufweisen.

3. Trennglied für eine Polymerelektrolyt-Brennstoffzelle gemäß Anspruch 1, wobei die Oberfläche des Reaktionsgasdurchgangs durch Strahlen, ein Laserverfahren oder ein Gießverfahren gebildet wird.

4. Trennglied für eine Polymerelektrolyt-Brennstoffzelle gemäß Anspruch 1, wobei die Oberfläche des Reaktionsgasdurchgangs durch mehrstufiges Strahlen gebildet wird.

5. Trennglied für eine Polymerelektrolyt-Brennstoffzelle gemäß Anspruch 1, wobei die Oberfläche des Reaktionsgasdurchgangs durch eine Sauerstoffplasmabehandlung gebildet wird.

6. Trennglied für eine Polymerelektrolyt-Brennstoffzelle gemäß Anspruch 1, wobei das Trennglied durch Formpressen einer Mischung, die den elektrisch leitenden Kohlenstoff und das Bindemittel enthält, gebildet wird.

7. Polymerelektrolyt-Brennstoffzelle, die ein Trennglied für eine Polymerelektrolyt-Brennstoffzelle gemäß Anspruch 1 umfasst.


**Revendications**

1. Séparateur pour pile à combustible à électrolyte polymère, contenant du carbone électriquement conducteur et un liant qui se lie au carbone électriquement conducteur, le séparateur comprenant :
   un passage de gaz réactionnel formé sur au moins une surface principale de celui-ci ; l'angle d'écoulement de gouttelette d'eau d'une surface du passage de gaz réactionnel n'étant pas inférieur à 5 degrés et pas supérieur à 45 degrés lorsqu'une gouttelette d'eau non inférieure à 50 $\mu$L et non supérieure à 80 $\mu$L est libérée dans des conditions de température ambiante non inférieure à 50 °C et non supérieure à 90 °C et d'humidité relative non inférieure à 70 % et non supérieure à 100 %, et la surface du passage de gaz réactionnel ayant une rugosité moyenne arithmétique non inférieure à 1,5 $\mu$m et non supérieure à 4,0 $\mu$m.

2. Séparateur pour pile à combustible à électrolyte polymère selon la revendication 1, dans lequel de fines parties convexes de la rugosité moyenne arithmétique du passage de gaz réactionnel ont un pas qui est sensiblement de 5 $\mu$m ou moins.

3. Séparateur pour pile à combustible à électrolyte polymère selon la revendication 1, dans lequel la surface du passage de gaz réactionnel est formée par projection de particules, procédé laser ou procédé de moulage,

4. Séparateur pour pile à combustible à électrolyte polymère selon la revendication 1, dans lequel la surface du passage de gaz réactionnel est formée par projection de particules en plusieurs étapes.

5. Séparateur pour pile à combustible à électrolyte polymère selon la revendication 1, dans lequel la surface du passage de gaz réactionnel est formée par traitement au plasma d'oxygène.

6. Séparateur pour pile à combustible à électrolyte polymère selon la revendication 1, dans lequel le séparateur est formé par moulage par compression d'un mélange contenant du carbone électriquement conducteur et le liant.

7. Pile à combustible à électrolyte polymère comprenant un séparateur pour pile à combustible à électrolyte polymère selon la revendication 1.

Fig. 1

Fig. 2

Fig. 3

EP 1 758 185 B1

Fig. 4

EP 1 758 185 B1

Fig. 5

Fig. 6

Fig. 7

15

45C

30B

30A

45B

45A

40B

40A

# Fig. 8

| | Ra | $\theta$ d | $\theta$ w | $\alpha$ | Pa (kPa) | Pc (kPa) |
|---|---|---|---|---|---|---|
| EXAMPLE 2-1 | 2.5 | 85 | 60 | 50 | 3 | 2.9 |
| EXAMPLE 2-2 | 3 | 65 | 10 | 30 | 2.5 | 2.4 |
| EXAMPLE 2-3 | 3.7 | 60 | 5 | 25 | 2.4 | 2.3 |
| EXAMPLE 2-4 | 5 | 65 | 10 | 30 | 2.5 | 2.4 |
| EXAMPLE 2-5 | 6.5 | 65 | 15 | 35 | 2.5 | 2.5 |
| EXAMPLE 2-6 | 7 | 70 | 20 | 40 | 2.5 | 2.5 |
| EXAMPLE 2-7 | 8 | 85 | 65 | 50 | 3.5 | 3 |

# Fig. 9

| | Ra | $\theta$ d | $\theta$ w | $\alpha$ | Pa (kPa) | Pc (kPa) |
|---|---|---|---|---|---|---|
| EXAMPLE 1 | 0.7 | 80 | 60 | 45 | 2.5 | 23 |
| COMPARISON 1 | 1.5 | 80 | 30 | 50 | 2.8 | 2.6 |
| EXAMPLE 2-3 | 3.7 | 60 | 5 | 25 | 2.4 | 2.3 |
| EXAMPLE 3 | 3.7 | 10 | 0 | 5 | 2.1 | 2.0 |
| EXAMPLE 4 | 6.5 | 20 | 0 | 10 | 2.2 | 2.1 |
| EXAMPLE 5 | 6.5 | 20 | 0 | 10 | 2.2 | 2.1 |
| EXAMPLE 6 | 0.8 | 110 | 100 | 20 | 2.3 | 2.2 |
| COMPARISON 2 | 6.3 | 110 | 100 | 50 | 2.7 | 2.5 |

Fig. 10

| PACKAGING TYPE | VINYL | | | ALUMINUM FOIL | | |
|---|---|---|---|---|---|---|
| NUMBER OF TIMES/TIME PERIOD | INITIAL STAGE | JUST AFTER TREATMENT | AFTER PACKAGING | INITIAL STAGE | JUST AFTER TREATMENT | AFTER PACKAGING |
| $\theta$ d(FIRST) | 114 DEGREES | 4 DEGREES | 18 DEGREES | 113 DEGREES | 6 DEGREES | 4 DEGREES |
| $\theta$ d(SECOND) | 110 DEGREES | 4 DEGREES | 24 DEGREES | 110 DEGREES | 8 DEGREES | 6 DEGREES |
| $\theta$ d(THIRD) | 112 DEGREES | 2 DEGREES | 28 DEGREES | 110 DEGREES | 4 DEGREES | 6 DEGREES |

Fig. 11

EP 1 758 185 B1

| | INITIAL STAGE | JUST AFTER TREATMENT | 5 DAYS AFTER | 10 DAYS AFTER | 15 DAYS AFTER | 20 DAYS AFTER | 25 DAYS AFTER | 30 DAYS AFTER |
|---|---|---|---|---|---|---|---|---|
| $\theta$ d | 90 DEGREES | 40 DEGREES | 55 DEGREES | 65 DEGREES | 75 DEGREES | 78 DEGREES | 77 DEGREES | 80 DEGREES |

Fig. 12

EP 1 758 185 B1

|  | INITIAL STAGE | JUST AFTER TREATMENT | 5 DAYS AFTER | 10 DAYS AFTER | 15 DAYS AFTER | 20 DAYS AFTER | 25 DAYS AFTER | 30 DAYS AFTER |
|---|---|---|---|---|---|---|---|---|
| θd | 111 DEGREES | 4.3 DEGREES | 4.78 DEGREES | 6.78 DEGREES | 5.54 DEGREES | 7.53 DEGREES | 6.9 DEGREES | 8.53 DEGREES |

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003282087 A
- JP 2003257468 A
- JP 2003151585 A
- JP 2003151572 A
- JP 2003123780 A
- JP 2003112910 A
- JP 2003109619 A
- JP 2002313356 A
- JP 2002042830 A
- JP 2002020690 A
- JP 2001076740 A
- JP 2000251903 A
- JP 2000223131 A
- JP 2000100452 A
- JP 2000036309 A
- JP HEI09298064 B
- JP HEI07302600 B
- JP HEI05251091 B
- JP 11040642 PCT
- JP 2003297385 A

- JP 2003217608 A
- JP 2003208905 A
- JP 2003208904 A
- JP 2002352813 A
- JP 2001283873 A
- JP 2001093539 A
- JP 2000031695 A
- JP HEI10003931 B
- JP 2001209950 A
- JP HEI08503100 PCT
- JP 2003197217 A
- JP 2003197203 A
- JP 2003168452 A
- JP 2003007312 A
- JP 2002343369 A
- JP 2002203571 A
- JP 2001110432 A
- EP 975040 A
- EP 949704 A